**Europäisches Patentamt**

**European Patent Office**

**Office européen des brevets**

(11) Veröffentlichungsnummer: **0 351 726**
**A1**

(12) ## EUROPÄISCHE PATENTANMELDUNG

(21) Anmeldenummer: **89112927.2**

(22) Anmeldetag: **14.07.89**

(51) Int. Cl.$^4$: **G01N 27/07 , G01W 1/06**

(30) Priorität: **21.07.88 DE 3824840**

(43) Veröffentlichungstag der Anmeldung:
**24.01.90 Patentblatt 90/04**

(84) Benannte Vertragsstaaten:
**AT CH DE FR GB IT LI NL**

(71) Anmelder: **ING. ALFRED SCHMIDT GMBH**

**D-7822 St. Blasien(DE)**

(72) Erfinder: **Zehnder, Walter**
**Lampertshalten**
**CH-1713 St. Antoni(CH)**
Erfinder: **Wenger, Rudolf**
**Waldmeisterweg 8**
**CH-3185 Schmitten(CH)**

(74) Vertreter: **Grättinger, Günter**
**Wittelsbacherstrasse 5 Postfach 16 49**
**D-8130 Starnberg(DE)**

(54) Verfahren und Vorrichtung zum Bestimmen der Konzentration von einem in Wasser gelösten Taumittel.

(57) Das in Wasser gelöste Taumittel (5) wird mit einer Vorrichtung mit wenigstens einem auf einer Fahrbahn (1) abrollenden Rad (2) als Lösung aufgenommen. Ein an der Lauffläche (6) des Rades (2) anliegendes Messrad (9) einer Messeinrichtung (3) übernimmt mit seiner als Messfläche (10) dienenden Mantelfläche die vorher durch Abweismittel (8) zu einer Feuchteschicht (7) abgepresste Lösung in einer Feuchteschicht (7'). In einem Abstand A angeordnete Elektroden (11) der Messeinrichtung (3) sind mit der Messfläche (10) in schleifendem Kontakt. Mit Hilfe einer durch eine Recheneinheit (4) an die Elektroden (11) angelegten niederfrequenten Wechselspannung wird die elektrische Leitfähigkeit der Feuchteschicht (7') zwischen den Elektroden (11) bestimmt. Mit einem Temperaturmessmittel (12) wird die Temperatur der Feuchteschicht (7') auf der Messfläche (10) gemessen und der Recheneinheit (4) als Wert zur Temperaturkompensation der aus dem Leitwert errechneten Taumittelkonzentration zugeführt.

Das Verfahren und die Vorrichtung sind zum Steuern eines Salzstreugerätes geeignet. Letzteres erlaubt die Umwelt durch einen wesentlich verkleinerten Taumittelverbrauch zu entlasten.

Fig 1

## Verfahren und Vorrichtung zum Bestimmen der Konzentration von einem in Wasser gelösten Taumittel

Die vorliegende Erfindung betrifft ein Verfahren zum Bestimmen der Konzentration von einem in Wasser gelösten Taumittel auf der Oberfläche längs oder quer einer Fahrbahn, und eine Vorrichtung zum Durchführen des Verfahrens, mit mindestens einem, zum Abrollen auf der Fahrbahn bestimmten Rad, wenigstens einer Messeinrichtung und einer Recheneinheit.

Eine ähnliche Vorrichtung ist in der deutschen Patentschrift DE 26 48 906 sowie im Zusatzpatent DE 29 14 158 offenbart. Ein auf einer Fahrbahn abrollendes Rad befördert eine auf der Fahrbahn befindliche Lösung von Streusalz und Wasser in eine an einem Fahrzeug angebrachte Messkammer mit einem fest vorgegebenen Volumen. In der Messkammer sind Elektroden zum Bestimmen der elektrischen Leitfähigkeit der Lösung der gefüllten Messkammer angeordenet. An der Messkammer sind ferner Mittel zum Oeffnen und Verschliessen einer Entleerungsöffnung angebracht. Im weiteren sind Mittel vorgesehen um die Temperatur der Lösung in der Messkammer zu bestimmen. Mit den gemessenen Grössen, elektrische Leitfähigkeit und Temperatur der Lösung wird in einem elektronischen Schaltkreis ein Signal erhalten, dessen Wert proportional der Konzentration des Streusalzes in der Lösung ist. Nach dem Bestimmen eines Wertes wird die Messkammer geleert indem die Lösung durch die sich öffnende Entleerungsöffnung abgelassen wird. Die Messkammer wird gereinigt und nach dem Schliessen zum Durchführen einer weiteren Messung erneut, wie beschrieben, mit Lösung gefüllt. Die erhaltenen Signale, dessen Werte Streusalzkonzentrationen darstellen werden bei diser bekannten Vorrichtung inbesondere dazu verwendet um zusammen mit weiteren gemessenen oder eingestellten Grössen eine mögliche Glatteisgefahr auf der Fahrbahn festzustellen und ein entsprechendes Warnsignal auszulösen oder ein Salzstreugerät zu steuern.

Bei dieser bekannten Vorrichtung wirkt sich nachteilig aus, dass bei nur schwach feuchter Fahrbahn die Messkammer erst nach geraumer Zeit oder überhaupt nicht zu füllen ist. Die Messkammer ist anfällig auf Verschmutzung und muss häufig gereinigt werden, was in der Ausführungsform gemäss der Zusatzpatentschrift durch durch an der Vorrichtung angebrachte Reinigungseinrichtungen geschieht. Im rauhen Betrieb des Winterdienstes sind jedoch diese feinen mechanischen Einrichtungen störungsanfällig. Mit dieser Vorrichtung ist beispielsweise auch nicht ohne weiteres feststellbar ob die Fahrbahn trocken oder nur leicht feucht ist. Dies wäre aber in Bezug auf die Verwendung der Vorrichtung zum Steuern eines Salzstreugerätes sehr wichtig zu wissen.

Es ist die Aufgabe der vorliegenden Erfindung ein Verfahren und eine Vorrichtung zum Bestimmen der Konzentration von in Wasser gelösten Taumittel, insbesondere Streusalz, von auf der Oberfläche einer Fahrbahn befindlichen Lösungen zu schaffen, das die oben erwähnten Nachteile nicht aufweist.

Diese Aufgabe wird mit den in den kennzeichnenden Teilen der Patentansprüche 1 und 7 aufgeführten Merkmalen gelöst.

Weitere vorteilhafte Ausführungsformen der Erfindung werden durch die abhängigen Ansprüche gekennzeichnet.

Anhand von Zeichnungen wird die Erfindung in der Folge beispielsweise näher beschrieben. Es zeigen

Fig.1 eine das Funktionsprinzip zeigende Seitenansicht der Vorrichtung

Fig.2 eine Seitenansicht einer bevorzugten Ausführungsform einer Messeinrichtung,

Fig.3 einen Schnitt durch die Messeinrichtung gemäss der Fig.2 und

Fig.4 eine schematische Darstellung der Vorrichtung in einer zum Steuern eines Salzstreugerätes geeigneten Ausführungsform.

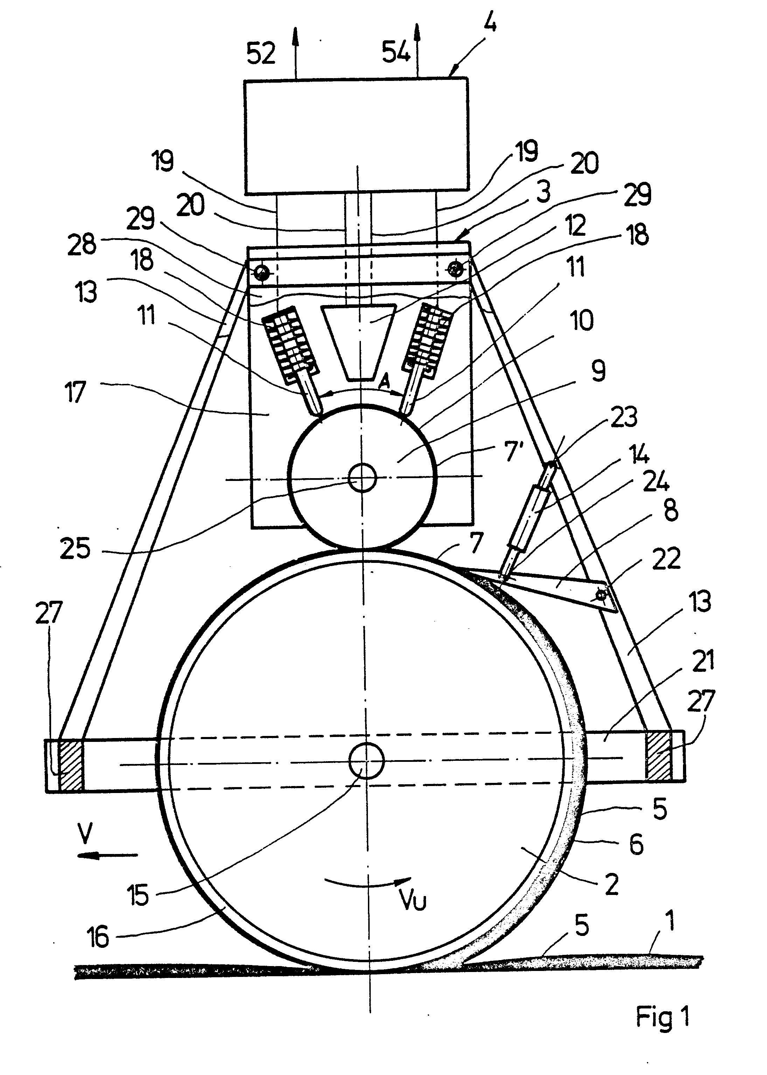

Die Figur 1 zeigt das Funktionsprinzip und den prinzipiellen Aufbau der erfindungsgemässen Vorrichtung in einer Seitenansicht. Innerhalb eines rechteckförmigen Rahmens 21 ist ein Rad 2 mit seiner Radachse 15 ungefähr mittig auf der Längsseite des Rahmens gelagert. Der Rahmen 21 ist im wesentlichen in jeder seiner Ecken mit je einer schräg nach oben ragenden Strebe 13 verbunden. An ihren dem Rahmen 21 abgewandten Enden weisen je zwei der Streben 13 einen parallel zur Längsseite des Rahmens 21 verlaufenden Träger auf. Zwischen den genannten Trägern ist eine Messeinrichtung 3 mit Befestigungsmitteln 29 befestigt. Der einfacheren Uebersicht halber ist der vordere Teil des Rahmens 21 an den Schnittstellen 27 weggeschnitten, die vorderen Streben 13 sind nur teilweise angedeutet und eine vordere Seitenwand 28, die zusammen mit einer hinteren Seitenwand 17 die Elemente der Messeinrichtung 3 trägt, ist durch einen Schnitt teilweise entfernt. Zur Verwendung der Vorrichtung ist vorgesehen den Rahmen 21 mit nicht dargestellten Mitteln an einem Fahrzeug zu befestigen. Die Vorrichtung erlaubt ein unterbruchfreies Bestimmen der Konzentration von in Wasser gelösten Taumittel 5, vorzugsweise Streusalz, das als Lösung auf der Oberfläche längs oder quer einer Fahrbahn 1 vorhanden ist. Das auf der Fahrbahn 1 abrollende Rad 2, das zum Aufnehmen des in Wasser gelösten Taumittels 5 bestimmt ist, weist vorzugsweise eine ebene Lauffläche 6 mit einem aus Gummi bestehenden Laufflächenbelag 16 auf. Je nach vorhandener lösungsmenge auf der Fahrbahn 1, der Fahrgeschwindigkeit V der Vorrichtung bezw. der Umfangsge-schwindigkeit $V_u$ des Rades 2 wird von der Lauffläche 6 mehr oder weniger von in Wasser gelöstem Taumittel 5 mitgenommen. In Fahrtrichtung V betrachtet sind im Bereiche der hinteren Radhälfte, vorzugsweise oberhalb der Radachse 15, Mittel 8 zum Abweisen von körnigem Schmutz oder von zuviel mitgenommenem Wasser von der Lauffläche 6 des Rades 2 angeordnet. Die Abweismittel 8 bestehen im gezeigten Beispiel aus einem Abweisblech, das zwischen zwei Streben 13 mit einer ersten Schwenkachse schwenkbar gelagert ist. Eine Druckfeder 14 ist mit der einen Seite über eine zweite, zwischen den genannten Streben angeordnete, Schwenkachse 23 gelagert und mit der andern Seite mit Lagermitteln 24 mit dem Abweisblech 8 schwenkverbunden. Das Abweisblech wird dadurch zum Fernhalten der genannten Stoffe auf die Laufffläche 6 gedrückt, so dass in Drehrichtung des Rades 2 nach dem Abweisblech 8 nur noch ein dünne Feuchteschicht 7 auf der Lauffläche 6 vorhanden ist. Die Dicke dieser Feuchteschicht ist immer gleich gross, unabhängig von der Wassermenge auf der Fahrbahn, und unabhängig von der Drehzahl des Rades 2. Dies ist eine Forderung, die zum Bestimmen der Konzentration des in Wasser gelösten Taumittel 5 unbedingt eingehalten werden muss, unter Umständen durch Anordnen eines zweiten Abweisbleches. Durch die konstante Dicke der Feuchteschicht 7 wird nämlich erreicht, dass von zwei variablen Unbekannten, der Taumittelmenge und der Lösungsmenge, letztere in eine Konstante umgeformt wird. Die verbleibende unbekannte Taumittelmenge lässt sich dann messtechnisch, beispielsweise mit einer Leitwertmessung, relativ einfach erfassen und bestimmen. Dazu ist in der erfindungsgemässen Vorrichtung die Messeinrichtung 3 vorgesehen. Diese besteht zur Hauptsache aus einem im wesentlichen zyliderförmigen Messrad 9 mit einer als Messfläche 10 dienenden Mantelfläche. Das Messrad ist mit einer zur Radachse 15 parallel verlaufenden Messradachse 25 zwischen der hinteren 17 und der vorderen Seitenwand 28 der Messeinrichtung drehbar gelagert. Das Messrad 9 liegt mit seiner Mantelfläche in Drehrichtung des Rades 2 gesehen hinter den Abweismitteln 8 an der Lauffläche 6 an und rollt auf letzterer beim sich drehenden Rad 2 ab. Dadurch wird die Feuchteschicht 7 auf die Messfläche 10 übertragen und ist dort als Feuchteschicht 7′ vorhanden. Durch diese Konstruktion gleicht sich der Taumittelgehalt der Feuchteschicht 7′ der Messfläche 10 dauernd dem Taumittelgehalt der Feuchteschicht 7 der Lauffläche 6 an. Angenommen, die Feuchteschicht 7 bestehe aus reinem Wasser, während die Feuchteschicht 7′ noch taumittelhaltig ist, erfolgt beim Drehen des Rades 2 ein Abbau des Taumittelgehaltes der Feuchteschicht 7′. Entsprechend umgekehrt verläuft der Vorgang wenn der Taumittelgehalt der Feuchteschicht 7 zunimmt. Kleine Taumittelgehaltschwankungen auf der Fahrbahn werden durch diese Konstruktion vorteilhafterweise ausgeglichen.

Zwei Elektroden 11 sind in einem Abstand A voneinander angeordnet und sind mit der Messfläche 10 in mechanischem Kontakt. Elektrodenandruckfedern 18 sorgen für einen konstanten Druck der Elektroden 11 auf die Messfläche 10. Die Elektroden haben die Aufgabe die elektrische Leitfähigkeit der Feuchteschicht 7 auf der Messfläche 10 in ihrem beabstandeten Bereich A zu messen. Dass dabei das Messrad 9 mit der Messfläche 10 aus einem elektrisch isolierenden Material besteht ist naheliegend. Die Elektroden 11 sind mit ersten Verbindungsleitungen 19 mit einer Recheneinheit 4 elektrisch verbunden. Letztere versorgt die Elektroden mit einer Speisespannung, vorzugsweise einer niederfrequenten Wechselspannung mit einer Frequenz zwischen 1 und 20 kHz, und bestimmt den über die Elektroden 11 und die Feuchteschicht 7′ im genannten Messradbereich fliessenden Strom. Da bekanntlich dieser Strom bei einem angenommenen konstanten Taumit telgehalt mit der Temperatur der Feuchteschicht 7′ ändert, ist ein Temperaturmessmittel 12 vorgesehen, um den gemessenen Stromwert entsprechend zu korrigieren. Auch Fehler durch Reibungserwärmungen der Vorrichtung werden damit ausgeglichen. Als Temperaturmessmittel 12 das über zweite Verbindungsleitungen 20 ebenfalls mit der Recheneinheit 4 verbunden ist, wird vorzugsweise ein berührungslos mes-sendes Infrarot-Temperaturmessgerät verwendet. Die Recheineinheit 4 besitzt einen Signalausgang 52 und ein mit einer Bedienungskonsole verbundenes Verbindungskabel 54. Die Beschreibung dieser Teile erfolgt weiter hinten.

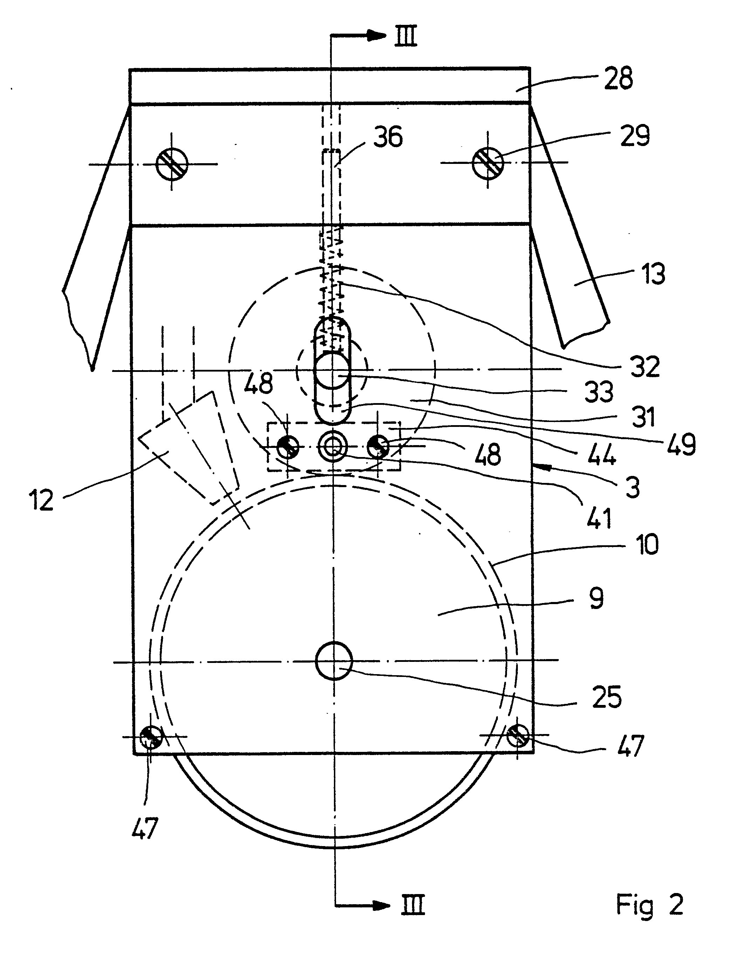

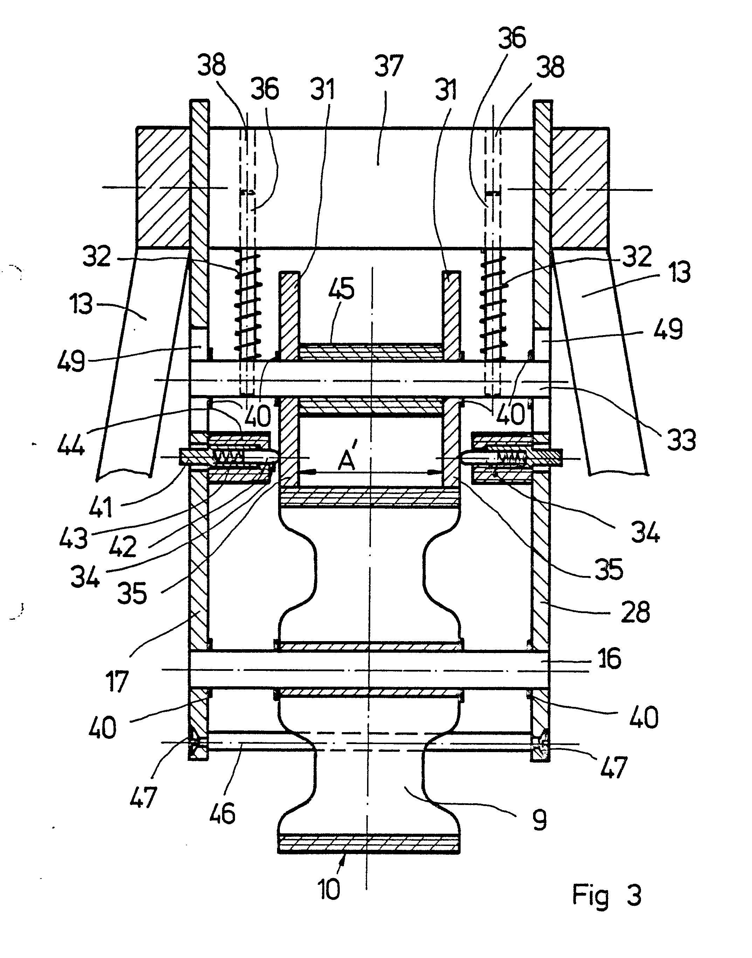

Versuche haben gezeigt, dass der konstante Druck der Elektroden 11 auf die Messfläche 10 für die Reproduzierbarkeit von Messresultaten von eminenter Wichtigkeit ist. Dies hat dazu geführt, dass für die Vorrichtung eine Messeinrichtung 3 mit der in den Figuren 2 und 3 gezeigten bevor-zugten Ausführungsform verwendet wird. Nachzu-tragen bleibt, dass die Messfläche 10 eine gute Benässbarkeit aufweisen muss. Dies kann dadurch erreicht werden, dass die Messfläche beispielsweise durch sandstrahlen aufgerauht wird oder aber aus einem gut benässbaren Material, zum Beispiel aus Gummi besteht.

Die bevorzugte Ausführungsform der in den Figuren 2 und 3 gezeigten Messeinrichtung 3 un-terscheidet sich zur beschriebenen Messeinrich-

tung in der Anordnung und Ausführung der Elektroden. Damit die Reibungsverluste möglichst klein gehalten werden können, sind zylinderförmige Elektrodenscheiben 31, an der Messfläche 10 des Messrades 9 abrollend, angeordnet. Die Scheiben 31 sind aus Metall gefertigt, zum Schutze vor Korrosion vorzugsweise aus rostfreiem Stahl. Beide Elektrodenscheiben 31 sind auf einer gemeinsamen, elektrisch isolierenden Achse 33 drehbar gelagert und mit einer, ebenfalls aus einem elektrischen Isoliermaterial bestehenden Distanzrolle 45 voneinander beabstandet. Die Distanz A' entspricht dabei im wesentlichen der Breite der Mantelfläche des Messrades 9. Damit die Messfläche 10 eindeutig definiert ist, und die Feuchteschicht 7 der Lauffläche 6 des Rades 2 keinen Einfluss auf die Grösse des Messwertes hat, kann der Umfang des Messrades nicht beliebig klein gemacht werden. Versuche haben gezeigt, dass er mindestens der Breite der Mantelfläche entsprechen muss, vorzugsweise aber ein Mehrfaches davon beträgt. Die Achse 33 verläuft parallel zur Messradachse 25 und ist in einer schlitzförmigen Achsführung 49 radial zum Messrad 9 verschiebbar gehalten. Sicherungsringe 40, vozugsweise Seegerringe sichern sowohl die Achse 33 als auch die Messradachse 25 vor seitlicher Verschiebung. Die die Bauteile der Messeinrichtung tragenden Seitenwände 17, 28 sind auf ihrer unteren Schmalseite mittels Distanzbolzen 46 und Schrauben 47 zusammengehalten. Auf der dem Messrad abgewandten Schmalseite sorgt ein Führungskörper 37 für den nötigen Abstand der beiden Seitenwände. Der Führungskörper ist mit Befestigungsmitteln 29 zusammen mit den Streben 13 beispielsweise verschraubt. In die Achse 33 sind zwischen jeder der Seitenwände 17, 28 und der Elektrodenscheiben 31 je ein in Richtung Führungskörper ragender Bolzen 36 eingepresst. Jeder der Bolzen ragt in eine der im Führungskörper 37 angebrachten Bohrungen 38. Auf jedem der Bolzen 36 befindet sich eine Andruckfeder 32 zum Andrücken der Elektrodenscheiben 31 längs der Achsführung 49 an die Messfläche 10 des Messrades 9. Die Speisespannung wird den Elektrodenscheiben 31 über Tastorgane 34 zugeführt. Auf jeder der Seitenwände 17, 28 ist im Bereich der Elektrodenscheiben ein den Scheiben zugewandter Tragkörper 44 mit Schrauben 48 befestigt. Jeder der Tragkörper weist eine Bohrung auf in die eine Führungsbüchse 41 eingepresst ist. Letztere ragt mit ihrem einen Ende durch eine in jeder der Seitenwände vorhandenen Oeffnung nach aussen und dient zum Anschluss der in den Figuren 2 und 3 nicht dargestellten ersten Verbindungsleitungen 19. Im andern aufgebohrten Ende der Führungsbüchsen 41 befindet sich je ein achsial zu den letzteren verschiebbarer Stift 42, der mittels einer Druckfeder 43 auf die benachbarte Stirnfläche 35 der Elektrodenscheibe 31, zum Herstellen eines elektrischen Schleifkontaktes, gedrückt wird. In der Fig. 2 nur angedeutet sind die vorgängig bereits beschriebenen Temperaturmessmittel 12.

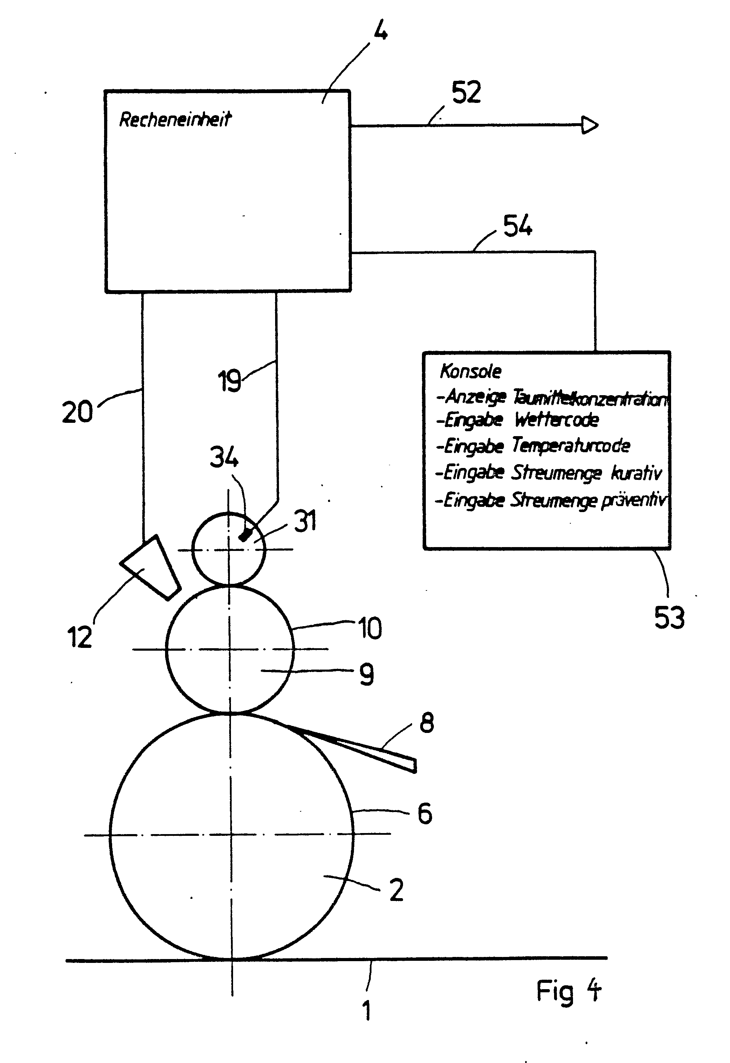

Anhand der Figur 4 wird im folgenden eine spezielle Ausführungsform der Vorrichtung beschrieben. Wie bereits erwähnt, werden die mit der Messeinrichtung gewonnenen Signale über die elektrische Leitfähigkeit der Feuchteschicht 7' und der Temperatur dieser Feuchteschicht der Recheneinheit 4 zugeführt. Diese berechnet daraus die entsprechende Konzentration des im Wasser auf der Fahrbahn gelösten Taumittels. Dieser Wert kann beispielsweise über das Verbindungskabel 54 der Konsole 53 zugeführt und dort zur Anzeige gebracht werden.

Der Signalausgang 52 dient zum Abgeben eines Steuersignales, beispielsweise zum Steuern eines Salzstreugerätes.

Die Konsole 53 weist Mittel zum Eingeben von Vorgabewerten in Form von Codes über das zu erwartende Wetter, der beim Antreffen einer vereisten Fahrbahn zu streuenden Salzmenge ( Kurativwert ) sowie der bei einer trockenen Fahrbahn eventuell nachzustreuenden Salzmenge ( Präventivwert ) auf.

Die Erfindung ermöglicht eine sichere und störungsfreie Aufnahme der in Wasser gelösten Taumittel von der Fahrbahn und führt praktisch eine verzugsfreie Messung der Taumittelkonzentration aus. Mit der erfindungsgemässen Vorrichtung soll erreicht werden, durch Kenntnis noch vorhandener Taumittelrückstände auf der Fahrbahn und durch Abschätzung der Wetterentwicklung weitere Taumittel gezielter nachzustreuen und daher eine wesentliche Verkleinerung des Taumittelverbrauches zu erwirken.

## Ansprüche

1. Verfahren zum Bestimmen der Konzentration von einem in Wasser gelösten Taumittel auf der Oberfläche längs oder quer einer Fahrbahn (1), dadurch gekennzeichnet, dass das in Wasser gelöste Taumittel mit einer Vorrichtung von der Fahrbahn aufgenommen und zum Anfeuchten einer in der Vorrichtung enthaltenen Messfläche (10) benutzt wird, dass die Dicke der Feuchteschicht (7') der angefeuchteten Messfläche (10) konstant gehalten und während des Verfahrens dauernd durch Feuchteschichten (7') von weiterem in Wasser gelösten Taumittel ersetzt wird, dass auf der Messfläche (10) die elektrische Leitfähigkeit und die Temperatur der Feuchteschicht ununterbrochen gemessen werden und dass aus den beiden Messgrössen die Konzentration des in Wasser gelösten

Taumittels berechnet wird.

2. Verfahren nach Anspruch 1, dadurch gekennzeichnet, dass die elektrische Leitfähigkeit zwischen mindestens zwei mit konstantem Druck auf die Messfläche (10) drückenden, in einem Abstand (A,A') angeordneten Elektroden (11, 31) gemessen wird.

3. Verfahren nach Anspruch 2, dadurch gekennzeichnet, dass an die Elektroden (11, 31) eine niederfrequente Wechselspannung angelegt wird und dass die elektrische Leitfähigkeit aus der Spannung und dem über die Elektroden (11, 31) fliessenden Strom bestimmt wird.

4. Verfahren nach einem der Ansprüche 1 bis 3, dadurch gekennzeichnet, dass als Messfläche (10) die Mantelfläche eines im wesentlichen zylinderförmigen Messrades (9) verwendet wird und dass die Elektroden (31) im wesentlichen paral lel zur Messradachse (25) auf die Mantelfläche drükken.

5. Verfahren nach Anspruch 4, dadurch gekennzeichnet, dass das Messrad (9) so gross gestaltet wird, dass der Umfang mindestens der Breite der Mantelfläche entspricht.

6. Verfahren nach einem der Ansprüche 1 bis 5, dadurch gekennzeichnet, dass die Temperatur der Feuchteschicht (7') kontaktlos gemessen wird.

7. Vorrichtung zum Durchführen des Verfahrens nach einem der Ansprüche 1 bis 6, mit mindestens einem, zum Abrollen auf der Fahbahn (1) bestimmten Rad (2), wenigstens einer Messeinrichtung (3) und einer Recheineinheit (4), dadurch gekennzeichnet, dass das Rad (2) eine zum Aufnehmen von in Wasser gelöstem Taumittel (5) bestimmte Lauffläche (6) aufweist, dass auf die Lauffläche einen Druck ausübende Mittel (8) zum Abweisen von körnigem Schmutz, sowie von zuviel aufgenommenem Wasser mit gelöstem Taumittel (5) vorhanden und zum Bilden einer Feuchteschicht (7) von konstanter Dicke, in Drehrichtung des Rades hinter den Abweismitteln (8), bestimmt sind, dass die Messeinrichtung (3) ein im wesentlichen zyliderförmiges Messrad (9) aufweist, dessen als Messfläche (10) dienende Mantelfläche an der Lauffläche (6) des Rades (2), in Drehrichtung des letzteren hinter den Abweismitteln, zum Uebernehmen der Feuchteschicht (7), anliegt, dass mindestens zwei in einem Abstand (A) angeordnete Elektroden (11) zum Messen der elektrischen Leitfähigkeit der Feuchteschicht (7') mit konstantem Druck mit der Messfläche (10) in Kontakt sind, dass Temperaturmessmittel, (12) zum Messen der Temperatur der Feuchteschicht (7') auf der Messfläche (10), vorhanden sind und dass die Elektroden und die Temperaturmessmittel der Messeinrichtung zum Berechnen der Konzentration des in Wasser gelösten Taumittels mit der Recheneinheit (4) elektrisch verbunden sind.

8. Vorrichtung nach Anspruch 7, dadurch gekennzeichnet, dass jede der Elektroden im wesentlichen aus einer zylinderförmigen Elektrodenscheibe (31) aus einem elektrisch leitfähigem Material gebildet ist und auf der Messfläche (10) des Messrades (9) abrollt und dass Federmittel (32) zum Andrücken der Elektrodenscheiben (31) auf die Messfläche (10) vorhanden sind.

9. Vorrichtung nach Anspruch 8, dadurch gekennzeichnet, dass die Scheiben (31) gegeneinander elektrisch isoliert auf einer gemeinsamen, parallel zur Messradachse (25) verlaufenden Achse (33) angeordnet sind.

10. Vorrichtung nach einem der Ansprüche 7 oder 8, dadurch gekennzeichnet, dass je ein Tastorgan (34) zum Abnehmen eines elektrischen Signales auf der einen Stirnfläche (35) jeder der Scheiben (31) federnd angeordnet und mit der Stirnfläche (35) in schleifenden Kontakt ist.

11. Vorrichtung nach einem der Ansprüche 7 bis 10, dadurch gekennzeichnet, dass das Messrad (9) aus einem elektrisch isoliernden Material hergestellt ist und dass die Messfläche (10) zum Erreichen einer guten Benässbarkeit aufgerauht ist oder aus einem gut benässbaren Material, beispielsweise aus Gummi, besteht.

12. Vorrichtung nach einem der Ansprüche 7 bis 11, dadurch gekennzeichnet, dass die Temperaturmessmittel (12) zum kontaktlosen Messen der Feuchteschicht eine Infrarottemperaturmesseinrichtung umfassen.

Fig 1

Fig 2

Fig 3

Recheneinheit

Konsole
- Anzeige Taumittelkonzentration
- Eingabe Wettercode
- Eingabe Temperaturcode
- Eingabe Streumenge kurativ
- Eingabe Streumenge präventiv

Fig 4

## EINSCHLÄGIGE DOKUMENTE

EP 89112927.2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.X) 5 |
|---|---|---|---|
| D,Y | <u>DE - A1 - 2 648 906</u><br>(BRAUN)<br>* Fig. 1; Anspruch 1; Seite 7, 1. Absatz * | 1 | G 01 N 27/07<br>G 01 W 1/06 |
| A | -- | 7 | |
| Y | <u>DE - A - 2 153 020</u><br>(ELTRO)<br>* Ansprüche *<br>-- | 1 | |
| A | <u>DE - A - 2 254 351</u><br>(BRAUN)<br>* Anspruch 1; Fig. 3-5 *<br>-- | 1 | |
| A | <u>AT - B - E 548</u><br>(SOLVAY)<br>---- | | |

RECHERCHIERTE SACHGEBIETE (Int. Cl.X) 5

G 01 N
G 01 W

Der vorliegende Recherchenbericht wurde für alle Patentansprüche erstellt.

| Recherchenort | Abschlußdatum der Recherche | Prüfer |
|---|---|---|
| WIEN | 27-09-1989 | NARDAI |